# EUROPÄISCHE PATENTSCHRIFT

(11) **EP 3 156 161 B1**
(45) Veröffentlichungstag und Bekanntmachung des Hinweises auf die Patenterteilung: **10.10.2018**
(21) Anmeldenummer: 16193879.0
(22) Anmeldetag: 14.10.2016
(51) Int. Cl.: B23B 47/28, B23B 49/02

(54) **VORRICHTUNG, INSBESONDERE DÜBELBOHR-LEHRE, ZUM BOHREN VON MITEINANDER FLUCHTENDEN DÜBELLÖCHERN MITTELS BOHRWERKZEUGEN**
DEVICE, IN PARTICULAR DOWEL HOLE DRILLING GUIDE, FOR DRILLING DOWEL HOLES ALIGNED WITH ONE ANOTHER USING DRILLING TOOLS
DISPOSITIF, EN PARTICULIER GABARIT DE PERÇAGE, DESTINÉ À PERCER DES TROUS DE CHEVILLES ALIGNÉS LES UNS PAR RAPPORT AUX AUTRES À L'AIDE D'OUTILS DE PERÇAGE

(30) Priorität: 14.10.2015 DE 202015105439 U
(43) Veröffentlichungstag der Anmeldung: 19.04.2017
(73) Patentinhaber: KWB Germany GmbH, 28816 Stuhr (DE)
(72) Erfinder: Böttcher, Torsten, 28844 Weyhe (DE); Ellerstorfer, Thomas, 93413 Cham (DE)
(74) Vertreter: Eisenführ Speiser

(56) Entgegenhaltungen:
- EP-A2- 1 595 627
- AT-U1- 1 326
- DE-U1-202014 001 382
- US-A- 3 069 936
- US-A- 3 381 387
- US-A- 4 176 989

## Beschreibung

Die Erfindung bezieht sich auf eine Vorrichtung zum Ausrichten von Bohrwerkzeugen relativ zu Plattenkörpern, insbesondere eine Dübelbohr-Lehre, mit einem Grundkörper, der mit mindestens einem Plattenkörper in Anlage bringbar ist, wenigstens einem Zentrierelement zum Ausrichten des Grundkörpers relativ zum Plattenkörper, und mit einer Bohrschablone mit mehreren Führungslöchern für Bohrwerkzeuge unterschiedlichen Durchmessers, wobei die Bohrschablone verstellbar am Grundkörper aufgenommen ist.

Vorrichtungen bzw. Hilfsgeräte zum Bohren von Löchern, beispielsweise miteinander fluchtenden Dübellöchern mittels Bohrwerkzeugen werden verwendet, um an Stirn- und/oder Breitenflächen von Plattenkörpern jeweils eine bestimmte Anzahl an Dübellöchern einzubringen. In die Dübellöcher werden Dübel, wie Holzdübel eingesetzt zum Verbinden der Plattenkörper. Speziell das Herstellen bzw. Erzeugen solcher Dübellöcher von Hand ist sehr aufwendig, da das Einbringen der Dübellöcher in die Plattenkörper eine hohe Genauigkeit voraussetzt, damit am Ende auch sämtliche die Verbindung zwischen den Plattenkörpern herstellenden Dübel mit den jeweils zugeordneten Dübellöchern fluchten und ebenfalls die gefügten Plattenkörper die gewünschte Ausrichtung zueinander haben.

Aus der DE 42 28 285 A1 ist eine solche Vorrichtung bzw. ein Hilfsgerät zum Bohren von Dübellöchern bekannt, die einen mit einem zu bohrenden Plattenkörpern in Anlage bringbaren Grundkörper aufweist. Die Vorrichtung umfasst zudem wenigstens ein Zentrierelement zum Ausrichten des Grundkörpers relativ zum Plattenkörper, wobei das mindestens eine Zentrierelement unmittelbar am Grundkörper angeordnet oder dem Grundkörper zumindest zugeordnet ist. Das Zentrierelement wird insbesondere an einem in einem der Plattenkörper zuvor erzeugten Dübelloch ausgerichtet. Des Weiteren umfasst die Vorrichtung eine verstellbar am Grundkörper aufgenommene Bohrschablone, welche mehrere Führungslöcher für Bohrwerkzeuge unterschiedlichen Durchmessers aufweist. In Abhängigkeit von der Größe des im Plattenkörper zu erzeugenden Dübelloches wird die Bohrschablone am Grundkörper verstellt. Dazu wird ein jeweils zum Einbringen in einen Plattenkörper benötigtes Führungsloch in eine Arbeitsstellung am Grundkörper gebracht. Während des Erzeugens der Dübellöcher in dem Plattenkörper ist es entscheidend, dass die Bohrschablone mit dem Führungsloch sicher zum Grundkörper fixiert wird. Das Fixieren erfolgt üblicherweise mit mindestens einer von Hand betätigbaren Feststellschraube.

DE 20 2014 001 382 U1 offenbart eine Vorrichtung zum Bohren von Löchern, welche einen Grundkörper aufweist, an dem eine Bohrschablone drehbar aufgenommen ist. Die Bohrschablone wird über eine verschieblich am Grundkörper angeordnete Sicherungsplatte in entsprechenden Arbeitsstellungen arretiert.

EP 1 595 627 A2 zeigt eine Bohrlehre zum Fertigen von Schrägbohrungen mit einem Schlittenträger und einem dazu schiebbeweglich gehaltenen Schlitten. Der Schlitten weist schräge Führungskanäle für einen Bohrer zum Erzeugen der Schrägbohrungen auf. Der Schlitten ist über eine Sicherungseinrichtung relativ zum Schlittenträger positionierbar.

AT 1 326 U1 offenbart offenbart eine Bohrschablone zum Schrägbohren mit zwei zueinander verstellbaren Spannbacken. Zwischen den Spannbacken wird ein Werkstück zu einem Bohrkörper mit Führungslöchern in verschiedenen Ausrichtungen arretiert. Das Arretieren erfolgt mithilfe sich durch den Bohrkörper und die Spannbacken erstreckender Bolzen, an deren Enden jeweils Flügelmuttern angeordnet sind, die auf die Spannbacken einwirken.

Der Erfindung liegt somit die Aufgabe zu Grunde, eine Vorrichtung der vorbezeichneten Art anzugeben, an der ein sicheres Fixieren und ein vereinfachtes Verstellen der Bohrschablone am oder zum Grundkörper in verkürzter Zeit möglich ist.

Die Erfindung löst die ihr zu Grunde liegende Aufgabe mit den Merkmalen des Anspruchs 1. Erfindungsgemäß weist die Vorrichtung eine Schnellspanneinrichtung zum Fixieren von zumindest der Bohrschablone relativ zum Grundkörper auf, wobei die Schnellspanneinrichtung eine Justiereinrichtung zum Verstellen der Größe der mittels der Spanneinrichtung erzeugten und zumindest auf die Bohrschablone einwirkenden Spannkraft aufweist.

Erfindungsgemäß wird erreicht, dass mit Hilfe der Schnellspanneinrichtung die Bohrschablone auf einfache und darüber hinaus auf sichere Art und Weise in ihrer jeweiligen Arbeitsstellung relativ zum Grundkörper fixiert werden kann. Ein zeitaufwändiges Lösen möglicher, die Bohrschablone am Grundkörper fixierender Feststellschrauben kann somit entfallen, wodurch das Verstellen der Bohrschablone und ein damit verbundener Wechsel eines Führungsloches in die jeweilige Arbeitsstellung am Grundkörper vereinfacht und zeitverkürzt durchgeführt werden kann. Mithilfe der Justiereinrichtung erfolgt eine bevorzugt individuelle Voreinstellung der durch die erfindungsgemäße Schnellspanneinrichtung auf die Bohrschablone einwirkenden Spannkraft. Darüber wird die Größe der auf den Spannhebel aufzubringenden Verstellkraft, in Abhängigkeit von der veränderbaren Spannkraft, angepasst.

Vorzugsweise umfasst die Schnellspanneinrichtung einen federnd gelagerten Spanndorn, der vorzugsweise am Grundkörper angeordnet, aber relativ zum Grundkörper und zur Bohrschablone bewegbar ist. Mit dem Betätigen des Spanndorns wird dieser in seine Freigabestellung überführt, womit die Verstellbarkeit der Bohrschablone relativ zum Grundkörper gewährleistet wird. Bei Nichtbetätigung des Spanndornes bewegt dieser sich selbsttätig in seine Ausgangslage und damit in die Fixierstellung am Grundkörper zurück. In der Fixierstellung des Spanndorns wird die Bohrschablone in der Arbeitsstellung des jeweiligen Führungsloches relativ zum Grundkörper fixiert und bevorzugt gleichzeitig gegenüber dem Grundkörper verspannt. Unter einem "Verspannen" ist vorliegend das Erzeugen einer Kraft zwischen und damit das Aufeinanderpressen von einander zugewandten Flächenbereichen von Bohrschablone und Grundkörper zu verstehen. Unter dem Begriff Arbeitsstellung ist vorliegend nicht eine bestimmte Stellung bzw. Ausrichtung der Bohrschablone relativ zum Grundkörper zu verstehen. Vielmehr ist mit einer Arbeitsstellung eine gezielte Ausrichtung eines der mehreren, bevorzugt verschieden großen Führungslöcher an der Bohrschablone relativ zum Grundkörper gemeint, wobei jedes Führungsloch seine jeweils eigene Arbeitsstellung am Grundkörper einnehmen kann.

Gemäß einer bevorzugten Ausgestaltung der erfindungsgemäßen Vorrichtung weist die Schnellspanneinrichtung einen relativ zum Grundkörper schwenkbar angeordneten Spannhebel auf, der zwischen einer Freigabestellung und einer Fixierstellung hin- und her bewegbar ist, wobei die Bohrschablone in der Freigabestellung verstellbar und in der Fixierstellung fixiert ist. Durch den bevorzugt relativ zum Grundkörper schwenkbar angeordneten Spannhebel ist die Freigabe der Bohrschablone am bzw. das Fixieren der Bohrschablone relativ zum Grundkörper vereinfacht. Der Spannhebel ist vorzugsweise in einem Winkel von etwa 90 Winkelgrad verstellbar zum Grundkörper aufgenommen. Zum Überführen des Spannhebels zwischen seiner Fixierstellung und seiner Freigabestellung wird dieser bevorzugt aus einer waagerechten Ausrichtung in eine senkrechte Ausrichtung überführt. In einer Ausführungsform der Erfindung wird die Bohrschablone mittels des schwenkbaren Spannhebels in der Arbeitsstellung eines jeweiligen Führungsloches zum Grundkörper fixiert. Zusätzlich ist zwischen vorzugsweise einander zugewandten Flächenbereichen von Grundkörper und Bohrschablone ein Reibschluss erzeugt.

Vorzugsweise weist der Spannhebel ein Lagerteil und ein mit dem Lagerteil gekoppeltes Betätigungsteil auf, wobei das Lagerteil exzentrisch um eine Schwenkachse aufgenommen ist. Während des Schwenkens des Spannhebels verändert sich bevorzugt der Abstand der Umfangsfläche des exzentrisch, also außermittig, aufgenommenen Lagerteiles zur Bohrschablone. Beim Verschwenken des Spannhebels in seine Fixierstellung verringert sich insbesondere der Abstand, sodass das Lagerteil direkt oder indirekt mit der Bohrschablone in Anlage gelangt und somit eine Spannkraft durch das Lagerteil auf die Bohrschablone erzeugt wird. Vorzugsweise ist das Lagerteil in einer Ausgestaltung der Erfindung zylindrisch ausgebildet, wobei dessen Schwenkachse versetzt zur Mittenachse des Lagerteiles verläuft. In einer weiteren Ausführungsform weist das Lagerteil bevorzugt im Wesentlichen rechtwinklig zueinander verlaufende, ebene Flächenbereiche auf. Darüber ist bewirkt, dass der Spannhebels mittels eines der jeweiligen ebenen Flächenbereiche des Lagerteils in seiner Fixier- oder Freigabestellung gehalten wird. Damit ist ein selbsttätiges Verschwenken aus der Fixier- oder Freigabestellung, welche der Spannhebel jeweils einnimmt, auf vorteilhafte Weise vermieden. Das mit dem Lagerteil gekoppelte Betätigungsteil ist ein Hebelarm, über das eine Hebelwirkung auf das schwenkbare Lagerteil ausgeübt wird.

Das Lagerteil ist bevorzugt an einem Endabschnitt eines am Grundkörper angeordneten Haltebolzens angeordnet, wobei die Schwenkachse des Lagerteils senkrecht zur Längsachse des Haltebolzens ausgerichtet ist. Vorzugsweise sind die Schwenkachse des Lagerteils und die Längsachse des Haltebolzens derart zueinander ausgerichtet, dass diese sich vorzugsweise unter einem rechten Winkel schneiden. Darüber ist eine verbesserte Kraftwirkung der mit dem Spannhebel erzeugten Spannkraft in Längsrichtung des Haltebolzens bewirkt. Vorzugsweise ist das Lagerteil des Spannhebels um die einen bevorzugt festen Abstand zum Grundkörper aufweisende Schwenkachse am Endabschnitt des Haltebolzens um einen Winkel von mindestens 90 Winkelgrad schwenkbar aufgenommen.

Gemäß einer bevorzugten Weiterbildung der erfindungsgemäßen Vorrichtung ist die Bohrschablone um eine Drehachse bewegbar, und die Schnellspanneinrichtung weist vorzugsweise ein Klemmteil auf, welches dazu eingerichtet ist, in der Fixierstellung des Spannhebels eine Spannkraft in Achsrichtung der Drehachse auf die Bohrschablone zu erzeugen. Die Bohrschablone wird vorzugsweise über eine aus der Spannkraft resultierenden Reibschlussverbindung relativ zum Grundkörper fixiert, welche zwischen bevorzugt senkrecht zur Drehachse verlaufenden Flächenbereichen von zumindest dem Grundkörper und der Bohrschablone wirkt. Die Schnellspanneinrichtung weist vorzugsweise ein mit dem Lagerteil des Spannhebels unmittelbar korrespondierendes Klemmteil auf, welches die Form einer Klemmplatte hat. Das Klemmteil, dass sich bevorzugt einseitig am Grundkörper abstützt, ist so angeordnet, dass Bereiche der Bohrschablone, zwischen dem Grundkörper und dem Klemmteil angeordnet sind. Eine auf das Klemmteil einwirkende Spannkraft in Richtung des Grundkörpers bewirkt somit ein sicheres Klemmen der Bohrschablone zwischen zwei klemmbackenartig relativ zueinander bewegbaren Strukturteilen der Vorrichtung.

Vorzugsweise ist die Justiereinrichtung mittels des Haltebolzens ausgebildet, dessen das Lagerteil aufnehmender Endabschnitt vorzugsweise im Abstand relativ zum Grundkörper verstellbar ist. Der Haltebolzen weist bevorzugt einen Gewindeabschnitt auf, über den der Haltebolzen verstellbar am Grundkörper befestigt ist. Durch das Verdrehen des Haltebolzens um seine Längsachse erfolgt eine Veränderung des Abstandes des Endabschnittes, an dem das Lagerteil des Spannhebels schwenkbar gehalten bzw. angelenkt ist, und damit der Schwenkachse für den Spannhebel relativ zum Grundkörper. Vorzugsweise weist der Haltebolzen einen Werkzeugangriff auf, über den ein Torsionsmoment auf den Haltebolzen und damit eine Drehung um die Längsachse des Haltebolzens bewirkt wird. Der Werkzeugangriff des Haltebolzens ist bevorzugt als gängiges Schlitzprofil oder als Innensechskant an der Stirnseite des Haltebolzens angeordnet.

Vorzugsweise weisen der Grundkörper und die Bohrschablone miteinander in Wirkverbindung bringbare Rastelemente zum Arretieren der Bohrschablone in vorgegebenen Arbeitsstellungen relativ zum Grundkörper auf. Darüber ist bewirkt, dass die Führungslöcher an der Bohrschablone zumindest in jeweils festen Arbeitsstellungen relativ zum Grundkörper ausgerichtet werden, bevor die Bohrschablone mit der Spanneinrichtung fixiert wird. Eines der Rastelemente ist in einer Ausführungsform z.B. als Nut an dem Grundkörper oder der Bohrschablone ausgebildet. Das Rastelement ist als ein in die Nut korrespondierend vorstehender Materialvorsprung ausgebildet, der entsprechend dann an der Bohrschablone oder dem Grundkörper angeordnet ist. Bevorzugt weist die Bohrschablone oder der Grundkörper einen in Richtung der Bohrschablone vorstehenden, stegartigen, vorzugsweise wenigstens teilweise elastisch verformbaren Materialvorsprung auf. Die Bohrschablone weist vorzugsweise an einer dem Grundkörper zugewandten Anlagefläche eine entsprechend der Anzahl an Führungslöchern in der Bohrschablone ausgebildete Anzahl von Nuten aus. Die Nuten sind bevorzugt in unterschiedlichen Winkelschritten um die Drehachse herum verteilt an der Bohrschablone ausgebildet bzw. angeordnet.

Vorzugsweise ist am Grundkörper wenigstens ein entlang wenigstens einer Führung verstellbarer Anschlag zum Positionieren des Grundkörpers am Plattenkörper angeordnet, an dem das Zentrierelement angeordnet ist. Mithilfe des verstellbar am Grundkörper aufgenommenen Anschlags erfolgt eine Ausrichtung des Grundkörpers der erfindungsgemäßen Vorrichtung entlang einer Stirn- oder Breitenfläche eines der miteinander verbindbaren Plattenkörper, an dem die Dübellöcher erzeugt werden bzw. an dem vorgefertigte Dübellöcher mittels des Zentrierelementes am Anschlag abgegriffen werden. Der Anschlag weist bzw. bildet bevorzugt ein oder mehrere Führungs- bzw. Anlagefläche für den Grundkörper auf oder aus. In einer bevorzugten Ausführungsform der Erfindung wird der verstellbare Anschlag über mindestens eine Führung am Grundkörper beweglich aufgenommen.

Vorzugsweise ist die Schnellspanneinrichtung dazu eingerichtet, den entlang des Grundkörpers verschiebbaren Anschlag relativ zum Grundkörper zu fixieren und freizugeben. Somit ist in einer weiteren Ausführungsform der Erfindung der verstellbare Anschlag zum Positionieren des Grundkörpers zu einem Plattenkörper mechanisch mit der Schnellspanneinrichtung gekoppelt. Mit dem Fixieren der Bohrschablone in einer vorgegebenen Arbeitsstellung am Grundkörper durch die Schnellspanneinrichtung erfolgt vorzugsweise zusätzlich das Fixieren des verschiebbaren Anschlags in einer bevorzugt voreinstellbaren Position am Grundkörper. Damit weist die Schnellspanneinrichtung zumindest eine Doppelfunktion auf.

Gemäß einer bevorzugten Weiterbildung weist das Zentrierelement eine am Anschlag vorstehende Zentrierspitze auf, welche im Wesentlichen in Richtung der Zentrierachse verstellbar am Anschlag angeordnet ist. Mithilfe des Zentrierelements erfolgt insbesondere ein Abgreifen, beziehungsweise Abtasten eines Dübelloches in einem Plattenkörper, der als Ausgangsbasis beziehungsweise Muster für das Bohren des entsprechenden Dübelloches im jeweils anderen Plattenkörper dient. Das Zentrierelement weist einen Zentrierspitze auf, deren äußerster Durchmesser größer ist als das mit der erfindungsgemäßen Vorrichtung, auch bezeichnet als Dübelbohr-Lehre, erzeugbare Dübelloch. Das Zentrierelement ist derart am Anschlag aufgenommen, dass es im Wesentlichen in Richtung der sich bildenden Zentrierachse relativ zum Anschlag bewegbar ist. Damit ist sichergestellt, dass der Anschlag mit seiner Führungsbeziehungsweise Ausrichtfläche jeweils vollflächig in Anlage mit einer Stirnfläche oder einer Breitenfläche des Plattenkörpers gelangt, worüber eine positionsgenaue Ausrichtung der Vorrichtung an den Plattenkörpern gewährleistet ist. Mit der verstellbaren Anordnung des Zentrierelementes in Richtung seiner Zentrierachse am Anschlag ist bewirkt, dass, unabhängig von der Größe der zu erzeugenden Dübellöcher, mit einem Zentrierelement bereits erzeugte Dübellöcher abgetastet werden können.

Vorzugsweise ist das Zentrierelement an einem Ende eines Federschenkels am Anschlag angeordnet, der radial zur Zentrierachse des Zentrierelements verläuft. Der vorzugsweise elastische Eigenschaften aufweisende Federschenkel ist am Anschlag angeordnet und bildet vorzugsweise einen Bereich der Anschlag- beziehungsweise Führungsfläche des Anschlags aus. In Abhängigkeit vom Durchmesser des abzutastenden Dübelloches wird der Anschlag mit dem Zentrierelement entsprechend aus seiner Grundstellung ausgelenkt. In einer anderen Ausgestaltung der Erfindung ist das Zentrierelement in Abhängigkeit von der Größe der abzugreifenden beziehungsweise abzutastenden Dübellöcher austauschbar an der Vorrichtung insbesondere am Anschlag ausgebildet.

Gemäß einer weiteren bevorzugten Ausgestaltung der erfindungsgemäßen Vorrichtung ist am Grundkörper eine verstellbar aufgenommene Abstandslehre vorgesehen. Mithilfe der Abstandslehre, deren Abstand zum Grundkörper bevorzugt voreinstallbar ist, können an einem jeweiligen Plattenkörper, insbesondere einer Stirn- oder Breitenfläche des Plattenkörpers in bevorzugt festen Abständen zueinander jeweils die zu erzeugenden Dübellöcher auf einfach Weise eingebracht, insbesondere gebohrt werden. An der Abstandslehre wird der zu erzeugenden Abstand zwischen zwei Dübellöchern voreingestellt, wodurch das zeitaufwendige Abmessen für einen genauen Abstand der Dübellöcher untereinander vermieden wird. Damit ist das Erzeugen von Dübellöchern mit jeweils identischen Abständen auf vereinfachte Weise möglich.

Bevorzugt weist die Abstandslehre eine Schienenkörper und einen am Schienenkörper angeordneten Abtaster mit einem Zentrierteil auf. Mittels des Schienenkörpers erfolgt eine feste Ausrichtung beziehungsweise Anordnung des Abtasters mit seinem Zentrierteil in einem bevorzugt voreinstellbaren Abstand zum Grundkörper der erfindungsgemäßen Vorrichtung. Vorzugsweise ist der Abstand zwischen der Mittenachse des sich in der Arbeitsstellung befindenden Führungsloches der Bohrschablone und dem Zentrierteil am Abtaster der Abstandslehre veränderbar ausgebildet. Das Zentrierteil und die Mittenachse des sich in der Arbeitsstellung am Grundkörper befindlichen Führungsloches liegen bevorzugt auf einer Achse, welche parallel zur Längsachse des am Grundkörper angeordneten Schienenkörpers verläuft.

In einer Ausführungsform der erfindungsgemäßen Vorrichtung ist der Schienenkörper in seiner Längsrichtung verschiebbar am Grundkörper angeordnet. Darüber ist eine einfache Verstellmöglichkeit des Abtasters mit seinem Zentrierteil relativ zum Grundkörper der erfindungsgemäßen Vorrichtung gewährleistet. Der Grundkörper weist vorzugsweise eine Führung auf, entlang der der Schienenkörper in Längsrichtung schiebebeweglich aufgenommen wird. Die Führung weist in einer Ausgestaltung der Erfindung elastisch verformbare Führungsflächen am Grundkörper auf, wobei der Schienenkörper klemmend, beziehungsweise selbsthemmend innerhalb der Führung am Grundkörper gehalten wird. Ein unbeabsichtigtes Verstellen des Schienenkörpers relativ zum Grundkörper wird damit erschwert.

In einer Weiterbildung der Erfindung ist der Schienenkörper über die Schnellspanneinrichtung am Grundkörper fixierbar. Bevorzugt wird der Schienenkörper über die Schnellspannrichtung einzeln oder zusammen mit der Bohrschablone und/oder dem verstellbar am Grundkörper aufgenommenen Anschlag in seiner Position am Grundkörper fixiert. Mittels der durch die Spanneinrichtung erzeugten Spannkraft wird der Schienenkörper am Grundkörper auf einfache Weise klemmend gehalten. Die Klemmwirkung wird vorzugsweise mit dem ebenfalls zum Fixieren der Bohrschablone am Grundkörper eingesetzten Klemmteil erzeugt. Das Klemmteil weist ein oder mehrere Klemmflächen auf, die vorzugsweise durch den Spannhebel der Schnellspanneinrichtung in dessen Fixierstellung direkt in Anlage mit Flächenbereichen von Schienenkörper und Bohrschablone gebracht werden.

Alternativ oder optional ist gemäß einer Weiterbildung der Erfindung vorgesehen, dass der Abtaster ein Verstellmittel zum Verändern der Position des Abtasters entlang des Schienenkörpers aufweist. Damit ist der Abtaster entlang des in einer Ausführungsform fest bzw. unveränderlich am Grundkörper angeordneten Schienenkörpers beweglich ausgebildet. In einer anderen Ausführungsform der Erfindung ist der Abtaster beweglich entlang des Schienenkörpers aufgenommen, der seinerseits beweglich am Grundkörper gehalten wird. Schienenkörper und Abtaster weisen bevorzugt miteinander korrespondierende Führungsflächen auf. Auch hier ist bevorzugt eine Klemmwirkung des beweglich aufgenommenen Abtasters vorgesehen, womit ein selbsttätiges Verstellen des Abtasters in Längsrichtung des Schienenkörpers erschwert wird.

In einer weiteren Weiterbildung der Erfindung ist das Verstellmittel am Abtaster ein drehbares Stellrad, das über ein Kopplungsmittel mit einem Bereich des Schienenkörpers gekoppelt ist, wobei das Kopplungsmittel dazu eingerichtet ist, eine Drehbewegung des Mit dem am Abtaster angeordneten Stellrad ist eine einfache Verstellmöglichkeit des Abtasters entlang des Schienenkörpers umgesetzt. Bevorzugt ist das die Verstellbewegung des Stellrades umwandelnde Kopplungsmittel derart ausgebildet, dass eine Selbstsicherung des Abtasters in Verstellrichtung am Schienenkörper bewirkt ist. Vorzugsweise ist das Kopplungsmittel als Ritzel-Zahnstangen-Trieb ausgebildet, wobei das Ritzel am Stellrad angeordnet und ähnlich einem Zahnrad ausgebildet ist. Das Ritzel des Stellrades kämmt vorzugsweise mit seinen umfänglich ausgebildeten Zähnen entlang eines am Schienenkörper ausgebildeten An- bzw. Eingriffbereiches, welcher mit den Zähnen des Ritzels korrespondierend ausgebildet ist.

Nachfolgend wird die Erfindung anhand eines Ausführungsbeispiels der erfindungsgemäßen Vorrichtung unter Bezugnahme auf die beigefügten Figuren näher beschrieben. Hierbei zeigen:
- Fig. 1:: eine perspektivische Ansicht eines Ausführungsbeispiels einer erfindungsgemäßen Vorrichtung;
- Fig. 2:: eine perspektivische Detailansicht der Vorrichtung mit ihrem Grundkörper und der Bohrschablone;
- Fig. 3-5:: perspektivische Ansichten des Grundkörpers nach Fig. 1 in verschiedenen Anwendungsfällen, und
- Fig. 6:: eine perspektivische Detailansicht einer Abstandslehre nach Fig. 1.

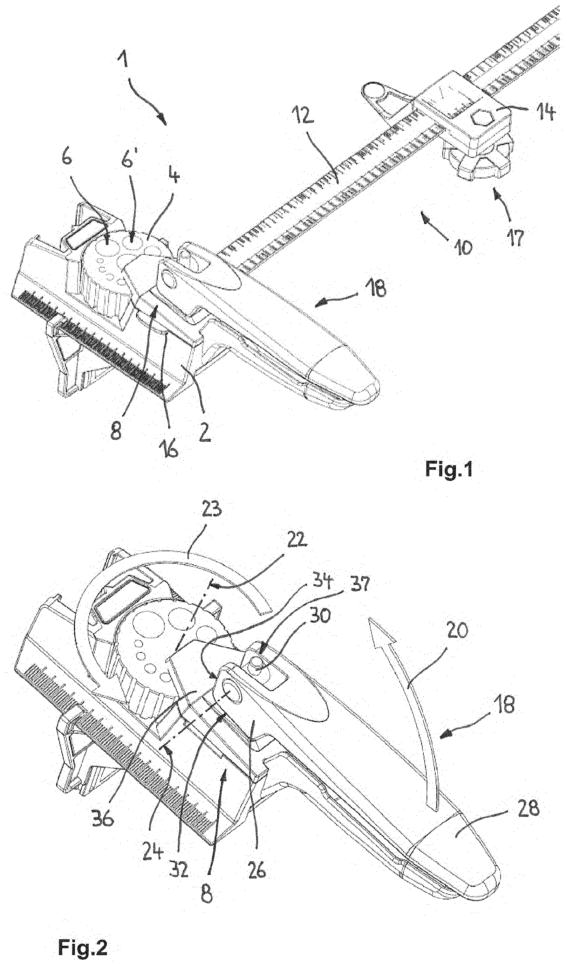

Fig. 1 zeigt eine Vorrichtung zum Ausrichten von Bohrwerkzeugen relativ zu Plattenkörpern im Form einer Dübelbohr-Lehre 1, welche einen Grundkörper 2 und eine an dem Grundkörper verstellbar aufgenommene Bohrschablone 4 mit Führungslöchern 6, 6' für Bohrwerkzeuge unterschiedlichen Durchmessers aufweist.

Der Grundkörper 2, welcher unter der Bezeichnung "Dübel-Profi" vertrieben wird und als einzelnes Werkzeug neben einer ebenfalls in Fig. 1 gezeigten Abstandlehre 10 verwendbar ist, wird neben dem Ausrichten von Bohrwerkzeugen zu einem Plattenkörper auch zum Führen des Bohrwerkzeuges mittels der Bohrschablone 4 während des Herstellens der Bohrung im Plattenkörper eingesetzt. Am Grundkörper 2 ist eine Schnellspanneinrichtung 8 angeordnet, mittels derer die Bohrschablone 4 in verschiedenen Arbeitsstellungen am Grundkörper fixiert wird. Dabei ist die Anzahl der verschiedenen Arbeitsstellungen abhängig von der Anzahl der Führungslöcher in der Bohrschablone.

Die Dübelbohr-Lehre 1 weist des Weiteren eine verstellbar am Grundkörper 2 aufgenommene Abstandslehre 10 als optionales Zusatzteil der Dübelbohr-Lehre 1 auf. Die Abstandslehre 10 ist dazu eingerichtet bzw. wird verwendet, um ein sich in Arbeitsstellung befindliches Führungsloch 6 der Bohrschablone 4 in einem an der Abstandslehre 10 voreingestellten Abstandsmaß zu einem Dübelloch auszurichten, dass bereits zuvor in einer Stirnfläche oder einer Breitenfläche eines nicht näher gezeigten Plattenkörpers erzeugt wurde. Die Abstandslehre 10 weist einen Schienenkörper 12 und einen am Schienenkörper 12 angeordneten Abtaster 14 auf. Ebenso wie die verstellbar am Grundkörper 2 aufgenommene Bohrschablone 4 ist auch der in einer Führung 16 (Fig. 2) am Grundkörper 2 aufgenommene Schienenkörper 12 mittels der Schnellspanneinrichtung 8 fixierbar. In Fixierstellung der Schnellspanneinrichtung 8 weist der Schienenkörper 12 eine feste Ausrichtung beziehungsweise Anordnung zum Grundkörper 2 auf. Der am Schienenkörper 12 angeordnete Abtaster 14 weist ein Verstellmittel 17 zum Verändern der Position des Abtasters entlang des Schienenkörpers 12 auf.

In Fig. 2 ist der Grundkörper 2 als Einzelwerkzeug in einer Detailansicht dargestellt. Die Schnellspanneinrichtung 8 weist einen relativ zum Grundkörper 2 schwenkbar angeordneten Spannhebel 18 auf. Der Spannhebel 18 ist zwischen einer in Fig. 2 gezeigten Fixierstellung und einer durch den Pfeil 20 angedeuteten Freigabestellung hin- und her bewegbar. In seiner Freigabestellung ist der Spannhebel 18 etwa in einem Winkel von etwa 90° zu seiner in Fig. 2 abgebildeten Ausrichtung ausgerichtet. In der Freigabestellung des Spannhebels 18 ist die Bohrschablone 4 um die Drehachse 22 (Pfeil 23) bewegbar, sodass je nach Größe des zu erzeugenden Dübelloches ein jeweiliges Führungsloch 6, 6' an der Bohrschablone 4 in ihre Arbeitsstellung bewegt werden kann.

Der Spannhebel 18 weist ein exzentrisch um eine Schwenkachse 24 aufgenommenes Lagerteil 26 auf. An dem Lagerteil ist ein als Hebelarm ausgebildetes Betätigungsteil 28 angeordnet. Das Lagerteil 26 und das Betätigungsteil 28 sind einstückig miteinander ausgebildet. Das in Fig. 2 gezeigte Lagerteil 26 ist an einem Endabschnitt eines am Grundkörper 2 ausgebildeten Haltebolzens 30 angeordnet. Die Schwenkachse 24 des Lagerteiles 26 verläuft insbesondere senkrecht zur Längsachse des Haltebolzens 30. In einer Ausführungsform der Dübelbohr-Lehre 1 schneiden die Schwenkachse 24 und die Längsachse des Haltebolzens 30 einander.

Das Lagerteil 26 weist in der gezeigten Ausführungsform ebene, unter einem Winkel zueinander verlaufende Stützflächen 32, 34 auf. Mit den Stützflächen 32, 34 wird einem selbsttätigen Verschwenken des Spannhebels 18 aus seiner Fixierstellung in die Freigabestellung und in umgekehrte Richtung entgegengewirkt. Die Schnellspanneinrichtung 8 weist ein Klemmteil 36 auf, das dazu eingerichtet ist, in der Fixierstellung des Spannhebels 18 eine Spannkraft in Achsrichtung der Drehachse 22 auf die Bohrschablone 4 und zusätzlich auf den Schienenkörper 12 der Abstandslehre 10 zu erzeugen.

In der dargestellten Ausführungsform der erfindungsgemäßen Dübelbohr-Lehre 1 weist die Schnellspanneinrichtung 8 eine Justiereinrichtung 37 zum Verstellen der Größe der mittels der Spanneinrichtung erzeugten und zumindest auf die Bohrschablone 4 einwirkenden Spannkraft auf. Dabei ist die Justiereinrichtung 37 mittels des Haltebolzens 30 ausgebildet, der mit einem Gewinde ausgerüstet ist und an seinem das Lagerteil aufnehmenden Endabschnitt einen Werkzeugangriff aufweist. Durch Verdrehen des Haltebolzens 30 über den Werkzeugangriff um seine Längsachse wird der Haltebolzen je nach Drehrichtung in den Grundkörper weiter hinein- beziehungsweise aus dem Grundkörper 2 weiter herausgeschraubt. Damit ändert sich der Abstand des Endabschnittes des Haltebolzens 30 und gleichzeitig der Abstand der Schwenkachse 24 des Lagerteils 26 des Spannhebels 18 zum Grundkörper 2.

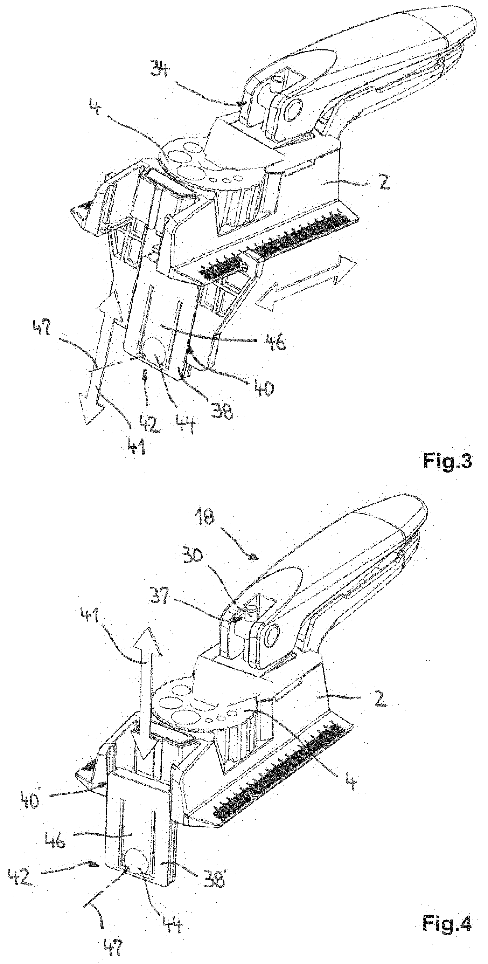

Die Fig. 3 bis 5 zeigen den Grundkörper 2 der Dübelbohr-Lehre 1 in verschiedenen Anwendungsfällen. Je nach Anwendungsfall ist am Grundkörper 2 ein Anschlag 38, 38', 38" vorgesehen. Über die Anschläge 38 bis 38" wird der Grundkörper 2 in verschiedenen Positionen an einem nicht näher dargestellten Plattenkörper ausgerichtet. Mittels des ausgerichteten Grundkörpers 2 kann dann in einer Stirn- oder Breitenfläche des Plattenkörpers, bevorzugt senkrecht zu einer jeweiligen Fläche, ein Dübelloch mittels eines Bohrwerkzeuges in einer exakt vorgegebenen Position hergestellt werden. Dabei wird das Bohrwerkzeug innerhalb des sich in der Arbeitsstellung befindlichen Führungsloches der Bohrschablone 4 geführt. Die Fig. 3 bis 5 zeigen verschiedene Formen der Anordnung der Anschläge 38 bis 38' an dem Grundkörper 2. Der in Fig. 3 abgebildete Anschlag 38 ist entlang des Grundkörpers 2 in entgegengesetzte Richtungen Pfeil 39 verschiebebeweglich aufgenommen. Der Anschlag 38 ist in der gezeigten Ausführungsform mechanisch mit der Schnellspanneinrichtung 8 gekoppelt. Der Anschlag 38 ist dazu eingerichtet, ebenfalls wie die Bohrschablone 4, mittels des Spannhebels 18 der Schnellspanneinrichtung 8 in einer beliebigen Position zum Grundkörper 2 fixiert und für eine Verschiebebewegung relativ zum Grundkörper freigegeben zu werden

Der Grundkörper 2 weist insbesondere mehrere Führungen 40, 40', 40" für die in verschiedenen Ausrichtungen zum Grundkörper 2 verschieblich (Pfeile 41) aufgenommenen Anschläge 38 bis 38" auf. Die Führungen 40 bis 40" sind als Gleitführungen ausgebildet, wobei im jeweiligen Anschlag 38 bis 38" und in einem Abschnitt des Grundkörpers 2 Führungsnuten beziehungsweise mit den Führungsnuten korrespondierende Führungsstege ausgebildet, beziehungsweise angeordnet sind, welche jeweils Teile der Führungen 40, 40', 40" ausbilden.

In einer weiteren Ausführungsform ist an einem jeweiligen Anschlag 38, 38', 38" ein Zentrierelement 42 angeordnet. Mit dem Zentrierelement 42, das eine am Anschlag 38 bis 38" vorstehende Zentrierspitze 44 aufweist, erfolgt insbesondere das Ausrichten des Grundkörpers 2 der Dübelbohr-Lehre 1 zu einem in einem Plattenkörper bereits erzeugten Dübelloch. Das zumindest eine Zentrierspitze 44 aufweisende Zentrierelement 42 ist an einem Ende eines an einem jeweiligen Anschlag 38 bis 38" beweglich ausgebildeten Federschenkels 46 angeordnet. Der Federschenkel 46 erstreckt sich beziehungsweise verläuft bevorzugt senkrecht zur Zentrierachse 47 des Zentrierelementes 42. In Abhängigkeit vom Durchmesser des jeweils an einer Stirnfläche oder Breitenfläche eines Plattenkörpers abgetasteten beziehungsweise abgegriffenen Dübelloches wird der Federschenkel 46 mit dem an seinem freien Ende angeordneten Zentrierelement 42 aus seiner Normalstellung heraus bewegt, insbesondere verschwenkt.

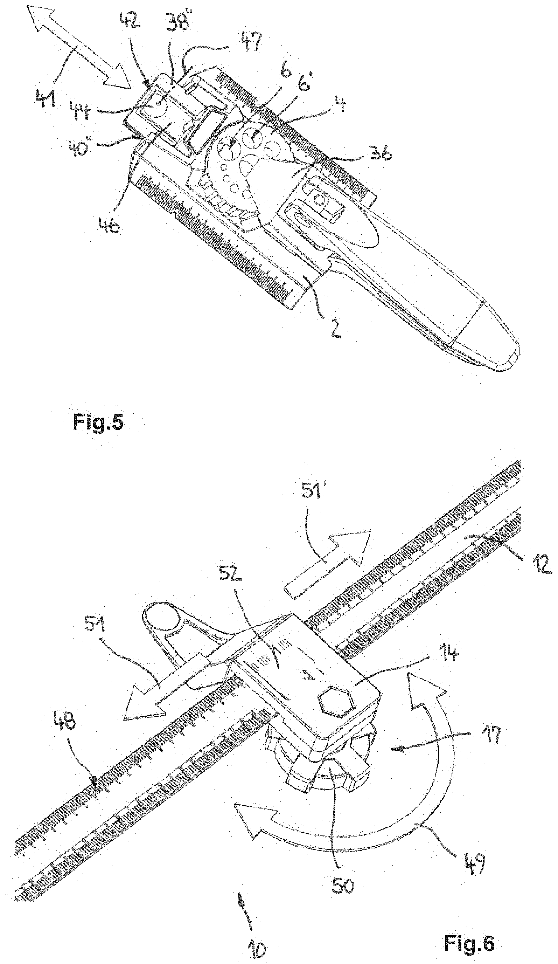

In Fig. 5 ist eine Detailansicht der am Grundkörper 2 anordenbaren Abstandslehre 10 gezeigt. Die Abstandslehre 10 umfasst den Schienenkörper 12 mit einer an der Oberseite des Schienenkörpers 12 abgebildeten Messskala 48 und den Abtaster 14. Der Abtaster 14 ist in einer Ausführungsform der Erfindung entlang der Oberseite des Schienenkörpers 12 bewegbar beziehungsweise verstellbar ausgebildet. Am Abtaster 14, der ein Zentrierteil zum Abgreifen beziehungsweise Abtasten eines bereits erzeugten Dübelloches aufweist, ist ein Verstellmittel 17 zum Verändern der Position des Abtasters 14 entlang des Schienenkörpers 12 vorgesehen. Das Verstellmittel 17 ist als drehbares Stellrad 50 ausgebildet, das über ein nicht näher dargestelltes Kopplungsmittel mit einem Bereich des Schienenkörpers 12 gekoppelt ist. Die Funktion des Kopplungsmittels am Abtaster 14 besteht darin, die Drehbewegung (Pfeil 49) des Stellrades 50 in eine geradlinige bzw. translatorische Bewegung (Pfeile 51, 51') des Abtasters 14 entlang beziehungsweise in Längsrichtung des Schienenkörpers 12 umzuwandeln.

In einer Ausführungsform der Abstandslehre 10 ist am Abtaster 14 ein die Messskala 48 des Schienenkörpers vergrößerndes Optikelement 52 angeordnet. Über das Optikelement 52 wird das Voreinstellen eines festen Abstandes zwischen dem Abtaster 14 und dem Grundkörper 2 insbesondere dem in Arbeitsstellung befindlichen Führungsloch 6 an der Bohrschablone 4 vereinfacht. In einer anderen Ausführungsform der erfindungsgemäßen Dübelbohr-Lehre 1 ist der Abtaster fest am Schienenkörper 12 und der Schienenkörper 12 in seiner Längsrichtung verschiebbar entlang der Führung 16 am Grundkörper 2 aufgenommen. Gleiche oder ähnliche Bauteile sind mit denselben Bezugszeichen bezeichnet.

### Bezuqszeichenliste

- 1: Dübelbohr-Lehre 1
- 2: Grundkörper
- 4: Bohrschablone 4
- 6, 6': Führungslöcher
- 8: Schnellspanneinrichtung
- 10: Abstandslehre
- 12: Schienenkörper
- 14: Abtaster
- 16: Führung
- 17: Verstellmittel
- 18: Spannhebel
- 20,23,41: Pfeil
- 22: Drehachse
- 24: Schwenkachse
- 26: Lagerteil
- 28: Betätigungsteil
- 30: Haltebolzen
- 32,34: Lagerfläche
- 36: Klemmteil
- 37: Justiereinrichtung
- 38, 38', 38": Anschlag
- 39,41: Pfeil
- 40, 40', 40": Führung
- 42: Zentrierelement
- 44: Zentrierspitze
- 46: Federschenkel
- 47: Zentrierachse
- 48: Messskala
- 49, 51, 51': Pfeil
- 50: Stellrad
- 52: Optikelement

## Patentansprüche

1. Vorrichtung zum Ausrichten von Bohrwerkzeugen relativ zu Plattenkörpern, insbesondere Dübelbohr-Lehre, mit
- einem Grundkörper (2), der mit mindestens einem Plattenkörper in Anlage bringbar ist,
- wenigstens einem Zentrierelement (42) zum Ausrichten des Grundkörpers (2) relativ zum Plattenkörper, und
- einer Bohrschablone (4) mit mehreren Führungslöchern (6, 6') für Bohrwerkzeuge unterschiedlichen Durchmessers, wobei die Bohrschablone (4) verstellbar am Grundkörper (2) aufgenommen ist,
- einer Schnellspanneinrichtung (8) zum Fixieren von zumindest der Bohrschablone (4) relativ zum Grundkörper (2),
**dadurch gekennzeichnet, dass**
die Schnellspanneinrichtung (8) eine Justiereinrichtung (37) zum Verstellen der Größe einer mittels der Spanneinrichtung (8) erzeugten und auf die Bohrschablone (4) einwirkenden Spannkraft aufweist.

2. Vorrichtung nach Anspruch 1,
**dadurch gekennzeichnet, dass** die Schnellspanneinrichtung (8) einen relativ zum Grundkörper (2) schwenkbar angeordneten Spannhebel (18) aufweist, der zwischen einer Freigabestellung und einer Fixierstellung hin- und her bewegbar ist, wobei die Bohrschablone (4) in der Freigabestellung verstellbar und in der Fixierstellung fixiert ist.

3. Vorrichtung nach Anspruch 2,
**dadurch gekennzeichnet, dass** der Spannhebel (18) ein Lagerteil (26) und ein mit dem Lagerteil gekoppeltes Betätigungsteil (28) aufweist, wobei das Lagerteil (26) exzentrisch um eine Schwenkachse (24) aufgenommen ist.

4. Vorrichtung nach Anspruch 3,
**dadurch gekennzeichnet, dass** das Lagerteil (26) an einem Endabschnitt eines am Grundkörper (2) angeordneten Haltebolzens (30) angeordnet ist, wobei die Schwenkachse (24) des Lagerteils (26) senkrecht zur Längsachse des Haltebolzens (30) ausgerichtet ist.

5. Vorrichtung nach mindestens einem der Ansprüche 1 bis 4,
**dadurch gekennzeichnet, dass** die Bohrschablone (4) um eine Drehachse (22) bewegbar ist, und dass die Schnellspanneinrichtung (8) vorzugsweise ein Klemmteil (36) aufweist, welches dazu eingerichtet ist, in der Fixierstellung des Spannhebels (18) eine Spannkraft in Achsrichtung der Drehachse (22) auf die Bohrschablone (4) zu erzeugen.

6. Vorrichtung nach einem der Ansprüche 1 bis 5,
**dadurch gekennzeichnet, dass** die Justiereinrichtung (37) mittels des Haltebolzens (30) ausgebildet ist, dessen das Lagerteil (26) aufnehmender Endabschnitt vorzugsweise im Abstand relativ zum Grundkörper (2) verstellbar ist.

7. Vorrichtung nach mindestens einem der Ansprüche 1 bis 6,
**dadurch gekennzeichnet, dass** der Grundkörper (2) und die Bohrschablone (4) miteinander in Wirkverbindung bringbare Rastelemente zum Arretieren der Bohrschablone (4) in vorgegebenen Arbeitsstellungen relativ zum Grundkörper (2) aufweisen.

8. Vorrichtung nach mindestens einem der Ansprüche 1 bis 7,
**dadurch gekennzeichnet, dass** am Grundkörper (2) mindestens ein entlang wenigstens einer Führung (40, 40', 40") verstellbarer Anschlag (38, 38', 38") zum Positionieren des Grundkörpers (2) am Plattenkörper angeordnet ist, an dem das Zentrierelement (42) angeordnet ist, wobei die Schnellspanneinrichtung (8) insbesondere dazu eingerichtet ist, den entlang des Grundkörpers (2) verschiebbaren Anschlag (38) relativ zum Grundkörper (2) zu fixieren und freizugeben.

9. Vorrichtung nach Anspruch 8,
**dadurch gekennzeichnet, dass** das Zentrierelement (42) eine am Anschlag (38, 38', 38") vorstehende Zentrierspitze (44) aufweist, welche im Wesentlichen in Richtung der Zentrierachse (47) verstellbar am Anschlag (38, 38', 38") angeordnet ist, wobei vorzugsweise das Zentrierelement (2) an einem Ende eines Federschenkels (46) am Anschlag (38, 38', 38") angeordnet ist, der radial zur Zentrierachse (47) des Zentrierelements (42) verläuft.

10. Vorrichtung nach mindestens einem der Ansprüche 1 bis 9,
**gekennzeichnet durch** eine am Grundkörper (2) verstellbar aufgenommene Abstandslehre (10).

11. Vorrichtung nach Anspruch 10,
**dadurch gekennzeichnet, dass** die Abstandslehre (14) einen Schienenkörper (12) und einen am Schienenkörper angeordneten Abtaster (14) mit einem Zentrierteil aufweist, wobei vorzugsweise der Schienenkörper (12) in seiner Längsrichtung verschiebbar am Grundkörper (2) angeordnet ist.

12. Vorrichtung nach mindestens einem der Ansprüche 10 und 11,
**dadurch gekennzeichnet, dass** der Schienenkörper (12) über die Schnellspanneinrichtung (8) am Grundkörper (2) fixierbar ist.

13. Vorrichtung nach mindestens einem der Ansprüche 11 und 12,
**dadurch gekennzeichnet, dass** der Abtaster (14) ein Verstellmittel (17) zum Verändern der Position des Abtasters (14) entlang des Schienenkörpers (12) aufweist.

14. Vorrichtung nach Anspruch 13,
**dadurch gekennzeichnet, dass** das Verstellmittel (17) ein drehbares Stellrad (50) ist, das über ein Kopplungsmittel mit einem Bereich des Schienenkörper (12) gekoppelt ist, wobei das Kopplungsmittel dazu eingerichtet ist, eine Drehbewegung des Stellrades (50) in eine Translation des Abtasters (14) entlang des Schienenkörpers (12) umzuwandeln.

## Claims

1. Device for aligning drilling tools relative to flat bodies, in particular dowel-drilling guides, comprising
- a main body (2) that can be brought into contact with at least one flat body,
- at least one centring element (42) for aligning the main body (2) relative to the flat body, and
- a drilling jig (4) comprising a plurality of guide holes (6, 6') for drilling tools of various diameters, the drilling jig (4) being held so as to be adjustable on the main body (2), and
- a quick-action clamping means (8) for fixing at least the drilling jig (4) relative to the main body (2),
**characterised in that** the quick-action clamping means (8) comprises an adjusting means (37) for adjusting the magnitude of a clamping force that is generated by means of the clamping means (8) and acts on the drilling jig (4).

2. Device according to claim 1, **characterised in that** the quick-action clamping means (8) comprises a clamping lever (18) that is arranged to as to be pivotable relative to the main body (2) and can be moved back and forth between a release position and a fixing position, the drilling jig (4) being adjustable in the release position and being fixed in the fixing position.

3. Device according to claim 2, **characterised in that** the clamping lever (18) comprises a bearing part (26) and an actuating part (28) that is coupled to the bearing part, the bearing part (26) being held eccentrically about a pivot axis (24).

4. Device according to claim 3, **characterised in that** the bearing part (26) is arranged on an end portion of a retaining bolt (30) arranged on the main body (2), the pivot axis (24) of the bearing part (26) being oriented perpendicularly to the longitudinal axis of the retaining bolt (30).

5. Device according to at least one of claims 1 to 4, **characterised in that** the drilling jig (4) can be moved around a rotational axis (22), and **in that** the quick-action clamping means (8) preferably comprises a clamping part (36) which is designed to generate a clamping force on the drilling jig (4), in the axial direction of the rotational axis (22), when the clamping lever (18) is in the fixing position.

6. Device according to any of claims 1 to 5, **characterised in that** the adjusting means (37) is formed by the retaining bolt (30), the end portion of which, that holds the bearing part (26), is preferably adjustable at a distance from the main body (2).

7. Device according to at least one of claims 1 to 6, **characterised in that** the main body (2) and the drilling jig (4) comprise catch elements, that can be brought into operative connection with one another, for locking the drilling jig (4) in predefined working positions relative to the main body (2).

8. Device according to at least one of claims 1 to 7, **characterised in that** at least one stop (38, 38', 38"), which can be adjusted along at least one guide (40, 40', 40"), for positioning the main body (2) is arranged on the flat body, on which stop the centring element (42) is arranged, the quick-action clamping device (8) in particular being designed to fix and release the stop (38), which can be slid along the main body (2), relative to the main body (2).

9. Device according to claim 8, **characterised in that** the centring element (42) comprises a centring tip (44) that protrudes from the stop (38, 38', 38") and is arranged on the stop (38, 38', 38") so as to be adjustable substantially in the direction of the centring axis (47), the centring element (2) preferably being arranged on one end of a spring leg (46) on the stop (38, 38', 38"), which spring leg extends radially with respect to the centring axis (47) of the centring element (42).

10. Device according to at least one of claims 1 to 9, **characterised by** a distance gauge (10) adjustably held on the main body (2).

11. Device according to claim 10, **characterised in that** the distance gauge (14) comprises a bar element (12) and a sensor (14), that comprises a centring part, arranged on the bar element, the bar element (12) preferably being arranged so as to be slidable in its longitudinal direction on the main body (2).

12. Device according to at least one of claims 10 and 11, **characterised in that** the bar element (12) can be fixed to the main body (2) by means of the quick-action clamping device (8).

13. Device according to at least one of claims 11 and 12, **characterised in that** the sensor (14) has an adjustment means (17) for changing the position of the sensor (14) along the bar element (12).

14. Device according to claim 13, **characterised in that** the adjustment means (17) is a rotatable set wheel (50) that is coupled to a region of the bar element (12) by means of a coupling means, the coupling means being designed to convert a rotational movement of the set wheel (50) into a translation of the sensor (14) along the bar element (12).

## Revendications

1. Dispositif servant à aligner des outils de perçage par rapport à des corps de panneau, en particulier un calibre de perçage pour chevilles, avec
- un corps de base (2), qui peut être amené en appui avec au moins un corps de panneau,
- au moins un élément de centrage (42) servant à aligner le corps de base (2) par rapport au corps de panneau, et
- un gabarit de perçage (4) avec plusieurs trous de guidage (6, 6') pour des outils de perçage de diamètre différent, dans lequel le gabarit de perçage (4) est logé de manière à pouvoir être réglé au niveau du corps de base (2),
- un système de serrage rapide (8) servant à bloquer au moins le gabarit de perçage (4) par rapport au corps de base (2),
**caractérisé en ce que**
le système de serrage rapide (8) présente un système d'ajustement (37) servant à régler la grandeur d'une force de serrage générée au moyen du système de serrage (8) et agissant sur le gabarit de perçage (4).

2. Dispositif selon la revendication 1,
**caractérisé en ce que** le système de serrage rapide (8) présente un levier de serrage (18) disposé de manière à pouvoir pivoter par rapport au corps de base (2), qui peut effectuer des mouvements de va-et-vient entre une position de déblocage et une position de blocage, dans lequel le gabarit de perçage (4) peut être réglé dans la position de déblocage et est bloqué dans la position de blocage.

3. Dispositif selon la revendication 2,
**caractérisé en ce que** le levier de serrage (18) présente une partie de palier (26) et une partie d'actionnement (28) couplée à la partie de palier, dans lequel la partie de palier (26) est logée de manière excentrique autour d'un axe de pivotement (24).

4. Dispositif selon la revendication 3,
**caractérisé en ce que** la partie de palier (26) est disposée au niveau d'une section d'extrémité d'un boulon de maintien (30) disposé au niveau du corps de base (2), dans lequel l'axe de pivotement (24) de la partie de palier (26) est aligné de manière perpendiculaire par rapport à l'axe longitudinal du boulon de maintien (30).

5. Dispositif selon au moins l'une quelconque des revendications 1 à 4,
**caractérisé en ce que** le gabarit de perçage (4) peut être déplacé autour d'un axe de rotation (22), et que le système de serrage rapide (8) présente de préférence une partie pour coincer (36), qui est mise au point pour générer, dans la position de blocage du levier de serrage (18), une force de serrage dans la direction axiale de l'axe de rotation (22) sur le gabarit de perçage (4).

6. Dispositif selon l'une quelconque des revendications 1 à 5,
**caractérisé en ce que** le système d'ajustement (37) est réalisé au moyen du boulon de maintien (30), dont la section d'extrémité logeant la partie de palier (26) peut être réglée de préférence à distance par rapport au corps de base (2).

7. Dispositif selon au moins l'une quelconque des revendications 1 à 6,
**caractérisé en ce que** le corps de base (2) et le gabarit de perçage (4) présentent des éléments d'enclenchement pouvant être amenés à coopérer les uns avec les autres pour arrêter le gabarit de perçage (4) dans des positions de travail prédéfinies par rapport au corps de base (2).

8. Dispositif selon au moins l'une quelconque des revendications 1 à 7,
**caractérisé en ce qu'**est disposée, au niveau du corps de base (2), au moins une butée (38, 38', 38'') pouvant être réglée le long d'au moins un guidage (40, 40', 40''), servant à positionner le corps de base (2) au niveau du corps de panneau, au niveau de laquelle l'élément de centrage (42) est disposé, dans lequel le système de serrage rapide (8) est mis au point en particulier pour bloquer et débloquer par rapport au corps de base (2) la butée (38) pouvant être coulissée le long du corps de base (2).

9. Dispositif selon la revendication 8,
**caractérisé en ce que** l'élément de centrage (42) présente une pointe de centrage (44) faisant saillie au niveau de la butée (38, 38', 38''), laquelle est disposée au niveau de la butée (38, 38', 38'') de manière à pouvoir être réglée sensiblement en direction de l'axe de centrage (47), dans lequel de préférence l'élément de centrage (2) est disposé au niveau de la butée (38, 38', 38'') au niveau d'une extrémité d'une branche de ressort (46), qui s'étend de manière radiale par rapport à l'axe de centrage (47) de l'élément de centrage (42).

10. Dispositif selon au moins l'une quelconque des revendications 1 à 9,
**caractérisé par** un calibre d'espacement (10) logé de manière à pouvoir être réglé au niveau du corps de base (2).

11. Dispositif selon la revendication 10,
**caractérisé en ce que** le calibre d'espacement (14) présente un corps de rail (12) et un système de balayage (14) disposé au niveau du corps de rail avec une partie de centrage,
dans lequel de préférence le corps de rail (12) est disposé de manière à pouvoir être coulissé dans sa direction longitudinale au niveau du corps de base (2).

12. Dispositif selon au moins l'une quelconque des revendications 10 et 11,
**caractérisé en ce que** le corps de rail (12) peut être bloqué au niveau du corps de base (2) par l'intermédiaire du système de serrage rapide (8).

13. Dispositif selon au moins l'une quelconque des revendications 11 et 12,
**caractérisé en ce que** le système de balayage (14) présente un moyen de réglage (17) servant à modifier la position du système de balayage (14) le long du corps de rail (12).

14. Dispositif selon la revendication 13,
**caractérisé en ce que** le moyen de réglage (17) est une molette de réglage (50) rotative, qui est couplée par l'intermédiaire d'un moyen de couplage à une zone du corps de rail (12), dans lequel le moyen de couplage est mis au point pour convertir un mouvement de rotation de la molette de réglage (50) en une translation du système de balayage (14) le long du corps de rail (12).
